# EUROPEAN PATENT SPECIFICATION

(11) **EP 4 716 466 B1**
(45) Date of publication and mention of the grant of the patent: **23.09.2026**
(21) Application number: 24833932.7
(22) Date of filing: 14.12.2024
(51) Int. Cl.: A23J 1/14, A23L 5/20, A23L 25/00, A23K 10/30, A23K 20/147, A23K 50/10, A23K 50/30, A23K 50/75, A23K 10/37, B07B 13/00

(54) **HIGH-YIELD METHOD FOR OBTAINING PROTEIN-ENRICHED RAPESEED MEAL**
ERTRAGREICHES VERFAHREN ZUR GEWINNUNG VON PROTEINANGEREICHERTEM RAPSÖLSAATMEHL
PROCÉDÉ À HAUT RENDEMENT POUR L'OBTENTION DE FARINE DE GRAINES DE COLZA ENRICHIE EN PROTÉINES

(30) Priority: 15.12.2023 EP 23217097
(43) Date of publication of application: 01.04.2026
(73) Proprietor: FEED FORWARD B.V., 4839 AH Breda (NL)
(72) Inventor: GOTINK, Gerhard, 2343 MB Oegstgeest (NL); REMIJN, Bastiaan, 4389 AH Breda (NL)
(74) Representative: van Dam, Vincent
(86) International application number: PCT/EP2024/086419
(87) International publication number: WO 2025/125661

(56) References cited:
- EP-A1- 1 908 355
- EP-A1- 2 848 128
- US-A1- 2014 314 928

## Description

### Field of the Invention

The present invention relates to a method for obtaining protein-enriched rapeseed meal as defined in claim 1.

### Background of the invention

The world's rapeseed harvest averages 85 million ton per year, Europe produces around 20 million ton per year. It is estimated that 90% of the global rapeseed harvest is used for oil extraction. The main process for oil extraction is cold pressing followed by solvent extraction, frequently hexane extraction. The byproduct from this oil extraction, rapeseed meal (or canola meal), is a protein containing- fraction which contains about 34% protein, next to fibers and 1%-5% oil. Rapeseed meal is the second largest protein supplement for animal feed after soymeal, which has a higher protein content and can be obtained in higher yields.

Therefore, technological strategies have been deployed to increase the yield of protein from rapeseed meal. The protein is not uniformly distributed through the rapeseed meal but is primarily present in a fraction of fine particles. If an average rapeseed meal has a crude protein content of 34%, this fine particle fraction will have a crude protein content of 39-40%.

Several methods are known for separating the protein-rich fractions from oilseed meal, for example from sunflower meal. Methods designed for preparing protein-rich sunflower fractions are not particularly suitable for preparing protein-rich fractions from rapeseed meal, since rapeseed meal and sunflower meal are different. Important differences are that rapeseed meal contains lower amounts of crude fiber than sunflower meal, higher amounts of oil and the rapeseed particles are larger than sunflower particles. Sunflower meal is also a more brittle product than rapeseed meal due to the harder and more structured hull material in the sunflower meal than in rapeseed meal. EP 2 848 128 describes a process for preparing a high protein sunflower meal fraction which process requires roller milling and air sieving. The air sieving allows separation of fractions enriched in protein and fractions enriched in crude fiber. Air sieving for separation of rapeseed meal into particles of different sizes and different relative weight will not be successful. Due to the stickiness of the rapeseed particles there will not be an optimal separation.

Special methods have been designed for sophistically preparing protein-rich fractions from rapeseed meal. The problem with these methods is that the protein content can be increased in comparison to the originating rapeseed meal, but yields are low, in particular too low to be economically feasible or industrially suitable.

For example, Mejicanos et al (2017) Can J Animal Sci 97:613 describes the production of canola meal (rapeseed) fractions using sieving and a combination of hammer milling and sieving. Sieving alone resulted in a yield of the fines fraction of 21% with a percentual increase in crude protein content of nearly 4% for *Brassica Napus* Canola Meal compared to the originating meal. A combination of hammer milling and sieving resulted in a higher yield of the fines fraction (45%) but with a lower percentual increase in crude protein (+3%) compared to the originating canola meal.

US2010/0215831 describes a method for producing a rapeseed meal, which comprises applying a rapeseed meal to a 32 to 60 mesh sieve to separate the rapeseed meal into a coarse rapeseed meal and a fine rapeseed meal. The yield of the fines fraction was 30% with a percentual increase in protein content of these fines fraction compared to the originating meal of about 6%.

In order to increase protein content of the sieved fraction, some studies changed the shape of the openings of the sieve. For example, WO2016/196617 describes a process for preparing a rapeseed meal with enriched protein content by sieving rapeseed meal onto an oscillating or vibrating classifying element with rectangular or elliptical holes, which element is inclined downwards in the frame in an angle from the horizontal position. The protein content of these fines fraction was percentually increased (about 5.5%) compared to the originating rapeseed meal, but the fines were obtained in a yield of about only 11%.

EP2848128 A1 discloses a process for preparing a sunflower meal fraction containing at least 50% of proteins and 10% or less of crude fibers.

US2014/314928 A1 discloses a method and unit for the processing of sunflower-extraction meal.

EP1908355 A1 discloses processes for the reduction of the fibre content in fibre-containing oilseeds.

For industrial applications and in view of the increasing demand for protein-rich raw materials in feed and food, higher yields of protein-enriched rapeseed meal would be desirable. Therefore, it is an aim of the present invention to provide a rapeseed meal processing method which delivers high yields of protein-enriched rapeseed meal.

### Brief description of the drawing(s)

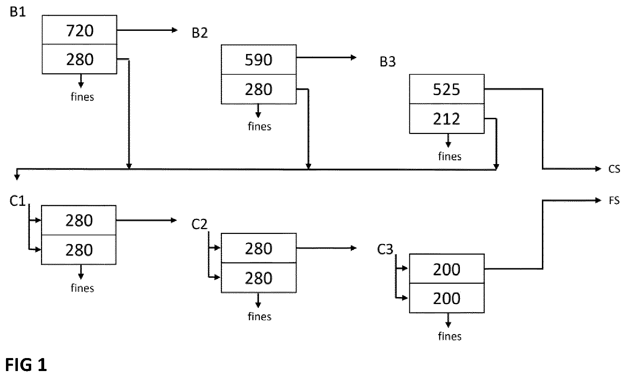

Fig. 1 Milling scheme of roller-milling in six stages. Rectangles are sieves. Numbers in rectangles indicate sieve pore size (micrometers). B1, B2, B3: break rollers. C1, C2, C3: reducing rollers. FS: Fine fiber stream; CS: Coarse fiber stream.

### Detailed description of the invention

The present invention relates to a method for preparing protein-enriched rapeseed meal fraction as defined in claim 1.

The advantage of the present method is that high yields of protein-enriched rapeseed meal fractions may be obtained from the by-product after valuable oil has already been isolated. The rapeseed meal fraction produced by this method has a higher content of protein per kg than the rapeseed meal from which it was fractionated (the parent rapeseed meal) and thus a higher nutritive value per kg than the parent rapeseed meal.

Another advantage is that due to the protein enrichment of the rapeseed meal, which was previously considered inferior to soya beans and defatted soybean meal because of their low protein content, now becomes a serious alternative for the use of soya beans and defatted soybean meal. Rapeseed meal has a higher fiber content compared with soybean meal. This is a major constraint that limits the use of rapeseed meal in feed for monogastric animals. However, the protein-enriched fraction (also referred to as fines fraction) of rapeseed meal has a significantly lower fiber content.

From a European perspective locally produced rapeseed meal is a preeminent alternative in monogastric feed to reduce the reliance of the European Union on expensive soymeal imports. Soybean meal products are correlated with deforestation and have a high ecological footprint.

The coarse fraction, which is the high fiber fraction, is a good source of structural fiber, e.g. lignocellulose, for specific diets that need low energy ingredients or a certain stimulation of the motility of the gut system.

The coarse rape seed meal fraction according in the context of the invention still contains 15-25% crude protein and is also a decent protein carrier, which makes it a suitable feed for poultry and pigs. Poultry feed needs structural fibers as it supports the gizzard as well as the health status of the liver and intestine which is important since the ban on antibiotic growth promotors. Also feed for gestation sows needs structural fiber to give a certain satiety to the animals to avoid stereotype behaviour.

Yet other advantages, in particular for large scale industrial applications, are that a rapeseed meal processing method which delivers high yield of protein-enriched rapeseed meal allows for a lower investment cost per metric ton crude protein enriched product compared to processing methods with lower yields; for a lower energy input per metric ton protein-enriched product compared to processing methods with lower yields; and for a lower claim on asset space for the same amount of protein-enriched product compared to processing methods with lower yields.

In the context of the present invention, all percentages are on the weight as is, i.e. not dry weight, unless otherwise indicated.

The parent rapeseed meal is preferably a by-product from the oil production from rapeseed, such as the coarse and fibrous side stream from rapeseed processing obtained after pressing the rapeseed and, optionally, after solvent extraction. Preferably, the parent rapeseed meal is the cake after oil extraction. A typical oil extraction process from rapeseeds includes the steps of screw pressing the oil bearing seeds, usually after removing debris and dirt and after adjusting their moisture content to about 10% -13% moisture. In the industry, dehulling of rapeseed is rare. The rapeseeds are processed with the hull attached to the seeds. After pressing, the oil remaining in the pressed seed (cake) is extracted with solvents, e.g. using hexane. The defatted product thus obtained is the rapeseed meal, which is discarded or used as or in animal feed and which may be used as the starting compound in the method of the present invention.

The method of the present invention may be used to produce a protein-enriched rapeseed meal fraction from any type of rapeseed. Suitable examples of rapeseed include canola (low-erucic acid, low-glucosinolate varieties of rapeseed), *Brassica napus, Brassica juncea* and *Brassica rapa* var. *oleifera.* Preferably, the rapeseed is *Brassica napus* or *Brassica juncea.*

In the method according to the invention, the parent rapeseed meal is preferably a defatted rapeseed meal with low oil content from which a protein-enriched fraction and a fiber-enriched fraction may be obtained. Enrichment indicates that the percentage protein or fiber in the fraction is higher than in the parent rapeseed meal.

In the context of the present invention, oil content refers to crude oil content. Crude oil content may be determined by any suitable method in the art, but is preferably determined by petroleum ether extraction (after hydrolysis) according to EU Regulation 12/2009, Annex III.

Moisture content may be determined by any suitable method in the art, but is preferably determined by gravimetric analysis with sand in a drying oven at 103 degrees Celsius, according to EU Regulation 152/2009, Annex III.

In the context of the present invention, protein content refers to crude protein content. Crude protein content may be determined by any suitable method in the art, but is preferably determined by nitrogen content multiplied with 6.25. Nitrogen content is measured by the Kjeldahl or Dumas method; Kjeldahl according to EC Regulation 152/2009 Annex III and Dumas according to ISO 16634, 2008 and ISO 16634, 2009. In the context of the present invention, crude protein refers to the fact that not all nitrogen in most feed is exclusively in the form of true protein (amino acids).

In the context of the present invention, fiber content refers to crude fiber content. Crude fiber content may be determined by any suitable method in the art, but is preferably determined by extensive method, according to EU Regulation 152/2009, Annex III.

In the case of rapeseed, the crude oil content of the parent rapeseed meal is between 1% and 5%, preferably between 1% and 4%, more preferably it is between 1% and 3%. The moisture content of the parent rapeseed meal is between 8% and 13%, preferably between 9% and 12%, more preferably about 11%. Crude protein content of the parent rapeseed meal is between 32% and 38%, preferably between 32% and 36% more preferably it is about 34%. Crude fiber content of the parent rapeseed meal is between 11% and 15%, preferably it is about 13%. All these percentages are by weight of the rapeseed meal as is.

### Milling

In the method according to the invention, the parent rapeseed meal is subjected to a roller milling process. During roller-milling, protein-rich fragments are chipped of by rollers shearing the rapeseed meal rather than pulverizing the rapeseed meal constituents. Additional reduction passages (with smooth rolls) are used to produce maximum amount of fines by scalping seed coat and fibers by making them flakier. This will optimize the amount of protein-enriched streams of rapeseed meal. In one embodiment, the roller milling process essentially consists of three break passages and three reduction passages.

After passing the rollers of the roller mill, the fragments are more heterogeneous in size with small protein rich fragments and larger fiber-rich fragments. Subsequently, classifying technology then make it easier to separate the protein-enriched fraction of the meal from the larger fibres. This is in contrast to a hammer milling process, which uses harsh forces and turns all fibrous materials into fine particles, which then make it difficult to isolate the protein-enriched fraction.

Separation may be by any means, but best results are obtained by classifying on size, such as by sieving. Preferably, classification is primarily or exclusively performed by sieving using one or more sieves. The one or more sieves for sieving may be incorporated in the roller-miller system. Preferably, the rolling-milling process essentially consists of several roller milling steps and sieving steps, while no other milling or classification methods are used in the process. Electrostatic separation is not preferred after roller milling, because it is a laborious method and leads to low yield or low enrichment.

The roller mill may be any suitable roller mill. Preferably, a roller-mill comprising one or more pairs of break rollers and one or more pairs of reducing rollers. Each pair of rollers typically comprises two in opposite direction of each other rotating cylinders in a horizontal plane separated by a small distance through which the rapeseed meal passes for shearing or scalping. Such roller mills are known from cereal milling, in particular wheat milling, or pulse milling, but were never used for rapeseed meal milling. Without wishing to be bound by theory, this is probably due to the fact that these roller milling systems are mainly used for starchy raw materials and not for rapeseed meal raw materials, which are rich in protein and fiber and contain little or no starch. Rapeseed typically contains maximally 5% starch, such as between 0.5% and 3% or between 0.5% and 2% starch, based on dry weight of the intact seed. In one embodiment, a Buhler Lab Mill MLU-202 (Buhler, Switzerland) wheat roller mill was used. Another reason why cereal milling was not used for rapeseed meal may be that after pressing and hexane extraction, the rapeseed does not have the shape of a seed anymore, but is more like a lumpy and sticky meal product in which the hulls and protein particles are strongly connected.

The distance between the rotating cylinders is small, and preferably the distance is less than 0.50 mm, less than 0.30 mm or less than 0.15 mm, more preferably the distance between the rotating cylinders is in the range of between 0.03 and 0.10 mm.

Each pair of break rollers comprises at least one cylinder having a fluted (grooved) surface. Preferably both cylinders have a fluted surface. Each break roller may have several fluted patterns, leading to a various number of flutes per roller or flutes per cm. Break rollers having 250 to 800 flutes per roller, preferably 350 to 500 flutes per roller, or 5 to 11 flutes per cm, preferably 6 to 10, flutes per cm, are suitable rollers for use in the method of the invention. Break rollers may have a round or a saw tooth profile. Preferably they have an asymmetric saw tooth profile with sharp leading edges and dull following edges, which allows for different dispositions between a pair of rollers.

Roller disposition of the break rollers may be sharp to dull, dull to sharp or dull to dull. Disposition sharp to sharp is best avoided, because the yield of the protein-enriched fraction will be sub-optimal. The disposition dull to dull is preferred, because it gives mainly a pressing and scraping effect, which results in a gentle treatment of the rapeseed meal. This position produces more fine intermediate products (protein-enriched fraction) and less coarse products.

The skilled person will understand that rollers and circumferential speed may further be adjusted to get optimal yields from the used rapeseed meal.

Each pair of reducing rollers comprises two cylinders having a smooth surface. Therefore, according to the method of this invention, the rapeseed meal is subjected to a roller milling process using fluted rollers and smooth rollers. In one embodiment, the roller milling process essentially consists of three break passages using fluted rollers and three reduction passages using smooth rollers.

Each pair of rollers has its own corresponding sifter section for sieving and collection of streams containing particles of certain size.

Streams may be recirculated, re-milled and collected until the desired size is obtained. Collected streams may be pooled to form one fraction, e.g. a fraction of fine particles. In this way, a roller milling system comprising one pair of break rollers and one pair of reducing rollers may produce six streams, which together form a fraction of fine particles, and two seed coat streams, which together form a coarse fraction.

According to the method of the invention, a fraction comprising particles smaller than 0.500 mm (500 micrometer (micron)) is collected, being the protein-enriched fraction, and a coarse fraction comprising particles from 0.500 mm, such as between 0.500 mm and 1 or 2 mm, is collected, being the fiber-enriched fraction.

Size is determined by sieving. Fines pass the openings of the sieves of 0.500 mm and coarse material does not pass the sieve and remains on the sieve. The roller milling process preferably comprises sieving using one or more sieves with an opening in the range from 0.200 mm to 0.720 mm or 0.200 mm to 0.500 mm. In one embodiment, a combination of sieves with openings of 0.280 mm, 0.212 mm, 0.200 mm, 0.525 mm, 0.590 mm and 0.720 mm is used to produce different streams of particles smaller than 0.500 mm. The collected streams together form the fraction of fine particles. In the same process, the coat fraction may be collected from the material which remains on the sieves. An example of a suitable sieve which can be used is a Retsch 2010 sieve.

The particles in the protein- enriched fraction are smaller than 0.500 mm, preferably smaller than 0.425 mm, smaller than 0.400 mm, smaller than 0.350 mm, smaller than 0.280 mm or smaller than 0.250 mm, as measured by Mesh Size (US international measurement standard).

At least 90%, at least 95% or at least 99% of the particles in the protein-enriched fraction has a size smaller than 0.500 mm. Preferably, at least 90%, at least 95% or at least 99% of the particles in the protein-enriched fraction has a size smaller than 0.425 mm, smaller than 0.400 mm, smaller than 0.350 mm, smaller than 0.280 mm or smaller than 0.250 mm.

The coarse fraction, comprising particles from 0.500 mm, such as between 0.500 mm and 1 or 2 mm, is the fiber-enriched fraction. At least 90%, at least 95% or at least 99% of the particles in the fiber-enriched fraction has a size of 0.500 mm or larger.

The yield of the protein-enriched fraction is at least 50%, preferably between 50% and 85%. Yield is the weight as is (fresh weight, i.e. not on dry matter) obtained as percentage of the total weight of the feed (parent material).

The protein-enriched fraction is enriched in protein, i.e. higher in protein content, compared to the parent material, the rapeseed meal provided in step (i) of the present method. Enrichment, such as protein or fiber enrichment, is expressed in percentage points (ppt). One percentage point is the unit for the arithmetic difference between two percentages. In the context of the present invention, an increase of 4 percentage points is indicated as +4%. A decrease or reduction, such as protein or fiber decrease, is also expressed in percentage points (ppt). A decrease of 4 percentage points is indicated as -4%.

Enrichment is typically at least 1 percentage point (+1 percentage points), preferably at least 2 percentage points (+2 percentage points) or 3 percentage points (+3 percentage points), more preferably at least 4 percentage points (+4 percentage points) or at least 5 percentage points (+5 percentage points), such as between 1 and 7 percentage points, between 4 and 7 percentage points, between 4 and 6 percentage points, between 5 and 6 percentage points or between 5 and 7 percentage points, enriched in protein compared to the parent rapeseed meal, which is the rapeseed meal provided in step (i) of the present method.

Obtaining a protein-enriched fraction from rapeseed meal in high yield was so far not possible. Typically, yields are low, in particular too low to be economically feasible or industrially suitable. If yields are high, enrichment is low.

It is important that the enrichment is high and obtained in high yield. In accordance with the present invention, a protein-enriched rapeseed meal fraction is obtained in a yield of at least 50%, such as between 50% to 85% or between 60% and 75% and is having an enrichment of at least +4 percentage points such as between +4 percentage points and +8 percentage points, such as between +4 percentage points and +6 percentage points or between +5 percentage points and +7 percentage points.

Protein-enrichment typically leads to a crude protein content of at least 38%, preferably between 38% and 50%, between 40% and 50% or between 40% and 45%. A protein content of 40% or more makes rapeseed meal, a good replacement for less sustainable soybean meal.

Preferably, at the same time, the fiber content of the protein-enriched rapeseed meal fraction is decreased, preferably by at least -1 percentage points, such as between -1 percentage points and -6 percentage points, such as between -2 percentage points and -5 percentage points or between -3 percentage points and -5 percentage points.

In one embodiment, the protein-enriched rapeseed meal fraction is obtained in a yield of at least 50%, such as between 50% to 85% or between 55% and 70%, having a protein content of at least 40%, such as between 40% and 50%, and is having an enrichment of at least +4 percentage points, such as between +4 and +8 percentage points, such as between +4 and +6 percentage points and is preferably having a fiber decrease of between -1 and -6 percentage points, such as between -2 and -5 percentage points or between -3 and -5 percentage points.

In another embodiment, at least 90%, at least 95% or at least 99% of the particles in the protein-enriched rapeseed meal fraction has a size smaller than 0.500 mm, smaller than 0.425 mm, smaller than 0.400 mm, smaller than 0.350 m, smaller than 0.280 mm or smaller than 0.250 mm, and is obtained in a yield of at least 50%, such as between 50% to 85% or between 55% and 70%, and is having a protein content of at least 40%, such as between 40% and 50%, and is having an enrichment of at least +4 percentage points, such as between +4 and +8 percentage points such as between +4 and +6 percentage points and is preferably having a fiber decrease of between -1 and -6 percentage points, such as between -2 and -5 percentage points or between -3 and -5 percentage points.

Another aspect of importance is the amino-acid composition of the protein-enriched fraction. The protein-enriched fraction typically has an amino acid composition which meets the needs of certain livestock species, like pigs, poultry, fish and ruminants. This is a real advantage because there are limited soybean meal substitutes available.

The protein-enriched fraction and the fiber-enriched fraction may have any colour, depending on the starter material. In one embodiment, the protein-enriched fraction is obtained from rapeseed meal and has a yellow/orange colour. The corresponding fiber-enriched fraction has a black colour. The skilled person will understand that these fractions may be decoloured if desired for application. Colour may be determined by any suitable method, for example by a Hunter Test or Minolta Color Measuring Test.

The fractions may be formulated into a paste, powder or liquid. The paste, powder or liquid may be used in food or feed applications, such as in food or feed products, including food or feed ingredients. Suitable concentrations depend on the food or feed application. Depending on the application, concentrations vary between 0.1 and 30% w/w, preferably between 0.5% and 25% w/w or between 2% to about 15%, or between 0.01 % w/w and 5% w/w, between 0.05% w/w and 1% w/w or between 0.1% w/w and 0.8% w/w, based on dry or wet weight of the food or feed.

For food applications, concentrations between 0.01 % w/w and 5% w/w, between 0.05% w/w and 1% w/w or between 0.05% w/w and 0.8% w/w, based on dry or wet weight of the food are suitable.

The fractions obtained according to the method according to the invention may be applied as or in animal feed, since they are beneficial to animal growth, health and feed conversion. This is true for both the protein-enriched fraction and for the coarse fraction obtained using the method according to the invention.

Also disclosed but not claimed herein is an animal feed containing the rapeseed meal of current disclosure and optionally suitable formulation ingredients. The animal feed may be for any animal, in particular for mammalians, birds, reptiles and fish, such as livestock, sports animals, pets or wildlife, including cats, cattle, dogs, equine animals, fish, goats, poultry, pig, rabbits, rodents, sheep, swine and sheep. Preferably, the animal feed is for monogastric, poultry or ruminant nutrition, more preferably, the animal feed is for cattle, pig or poultry. The animal feed may be a dry feed, such as a powder or pellet, moist feed or wet feed, such as a drink. It may be a powder, pellet, or extruded feed.

In one embodiment, the fines fraction is included in animal feed, such as feed for ruminants, to an end concentration of between 0.1% w/w to 30% w/w, such as between 0.5% and 25% w/w, based on the dry or wet weight of the animal feed.

In another embodiment, the fines fraction is included in animal feed, such as feed for poultry, to an end concentration of between 0.1% w/w to 10% w/w, such as between 0.5% and 5% w/w, based on the weight, as is, of the animal feed.

The fractions obtained after roller milling and sieving may also be used in the food industry. The fractions may be used as such or may be formulated into a liquid, paste or powder for human consumption. The formulation may be used for its functionality, for example as a foaming agent, gelling agent, thickener, emulsifier or colourant. The formulation may also be used protein supplement and protein replacer. It may completely or partly replace. For example for at least 10%, at least 20%, at least 30%, at least 40% or at least 50%, replace soy or egg protein. Also disclosed but not claimed herein is an is a food or food ingredient containing the rapeseed meal according to the current disclosure, and optionally suitable formulation ingredients.

The formulations according to the disclosure may comprise other compounds, such as gelling agents or viscosifiers, such as gelatine, propylene glycol or xanthan gum; antimicrobials, such as antibiotics; vitamins, such as vitamin A, a vitamin B, vitamin D or vitamin E; minerals, such as calcium, zinc, iron or potassium. The skilled person will understand that one compound may have several different functions. For example, a vitamin may also be an antimicrobial.

The fractions after roller milling and sieving may also be used in the non-food industry, In particular rapeseed fibers may be used in the non-food industry because they contain about 20% of lignin, qualifying it as a good source of this biological binder. Suitable applications are in the paper and pulp industry, plastic industry and the construction industry.

### EXAMPLES

### Example 1

The rapeseed meal obtained after hexane extraction (34.5% protein, 12% fiber and 3% oil) was fractionated using a roller-mill (Buhler Lab Mill MLU-202, Buhler Switzerland) having one pair of fluted break rollers with three different fluted patterns and one pair of reducing rollers with smooth surface. The milling included six grinding stages and their corresponding sieving sections (Fig. 1). It comprised three breaks passages (B1, B2 & B3), disposition dull to dull, and three reduction (C1, C2 & C3) passages, with decreasing gap. Six fine particle streams along with the coarse seed coat and fine seed coat stream were produced from the mill. Rollers were adjusted to get the optimal fine particle yields from the parent rapeseed meal. Three milling trials were performed with 5 kg of rapeseed meal each.

Eight streams were recovered after milling (Table 1). Streams B1, B2, B3, C1, C2 and C3 were merged into one protein-enriched fraction. The two streams with coat material were merged into a black coloured fraction. Table 2 shows the yield of protein-enriched fraction and of the fiber-enriched coarser material for each trial.

All trials resulted in a yield of at least 50% for the fraction with particles smaller than 0.280 mm. These fractions were at least +5 percentage points protein-enriched compared to the parent meal. These protein-enriched fractions had a fine yellow/orange colour and a protein content of 40% and a fiber content of 8%. The stream with the coarse fiber and the stream with the fine fiber were also merged in a coarse seed coat material fraction. This black colored fraction contained 25% protein and 20% fiber. The yield of this fraction in the trials varied between 38%-47%.

**Table 1**

| Coarse fiber stream (CS) | >525 mms |
|---|---|
| B1 fines | <0.280 mm after first milling step |
| B2 fines | <0.280 mm after second milling step |
| B3 fines | <0.212 mm after a third milling step |
| C1 fines | < 0.280 mm after three milling steps and a reduction step (smooth rolls) |
| C2 fines | <0.280 mm after three milling steps and two reduction steps (smooth rolls) |
| C3 fines | <0.200 mm after three milling steps and three reduction steps (smooth rolls) |
| Fine fiber stream (FS) | >0.200 mm and <0.525mm after three milling steps and three reduction steps (smooth rolls) |

**Table 2**

| | Yield protein enriched fines (%) | Yield fiber enriched coarse material (%) |
|---|---|---|
| Trial 1 | 53 | 47 |
| Trial 2 | 62 | 38 |
| Trial 3 | 59 | 41 |

### Example 2 Comparative example: shaking and sieving

De-oiled oil rapeseed meal obtained after hexane extraction (34.5 % protein, 12% fiber, 3% oil, moisture 12.2%) was subjected to shaking and sieving through a 0.400 mm sieve (Retsch 2010) to separate fines from larger particles. The results are presented in Table 3 and compared to the results from Trial 2 in Example 1.

The protein-enriched fine fraction was a fine yellow/orange fraction containing 40% protein and 8% fiber. The yield of this fraction was only 11%. The fraction with the coarse particles was the major fraction. The yield of this fraction was 89%. This fraction of coarse particles contained 33.9 % protein and 12.5% fiber, much like the original rapeseed meal.

**Table 3**

| | Shaking/sieving (Ex. 2) | | | Roller milling /sieving (Ex. 1) | | |
|---|---|---|---|---|---|---|
| | Yield % | Protein | Fiber | Yield % | Protein | Fiber |
| Starting material | 100 | 34.5% | 12% | 100 | 34.5% | 12% |
| Fraction <0.400 mm | 11 | 40% | 8% | 62 | 40% | 8% |
| Fraction > 0.400 mm | 89 | 33.9% | 12.5% | 38 | 25% | 20% |

The major fraction after roller-milling/sieving was the fine fraction, which is the protein-enriched fraction, whereas after shaking/sieving the major fraction is the coarser fraction, the fiber fraction. Thus the yield of the protein-enriched fraction fine fraction is much larger in the case of roller-milling/sieving (62%) than in the case of shaking/sieving (11%). The fiber content of the fiber fraction was also increased in the case of roller-milling/sieving (from 12% to 20%), while it stayed almost the same when shaking/sieving. Enrichments are shown in Table 4.

**Table 4**

| | Shaking/sieving (Ex. 2) | | | Roller milling /sieving (Ex. 1) | | |
|---|---|---|---|---|---|---|
| | Yield % | Protein | Fiber | Yield % | Protein | Fiber |
| Starting material | 100 | 34.5% | %12 | 100 | 34.5% | 12% |
| Fraction <0.400 mm | 11 | +5.5% | -4.0% | 62 | +5.5% | -4.0% |
| Fraction > 0.400 mm | 89 | -0.6 % | +0.5% | 38 | -9.5% | +8.0% |

### Example 3 Comparative example: hammer milling and sieving

De-oiled rapeseed meal obtained after hexane extraction (35.9% protein, 11.8% fiber, 3.3% oil and 11.9% moisture) was subjected to sieving and a combination of hammer milling and sieving. Rapeseed meal was sifted by using Retsch sieves with mesh sizes of 0.500 and 0.250 mm. Sieving was done manually for 8 minutes. Hammermilling was done with a Retsch mill over a 2-millimeter screen. After milling, sieving was done manually for 8 minutes. Fractions below 0.500 mm were indicated as fines with enriched protein. Results are presented in Table 5 and show that sieving resulted in a fines fraction with 39.3% crude protein (A and B), leading to a +3.4% protein increase for the fraction < 0.500 mm with a yield of 16%.

A combination with hammermilling significantly increased the fraction of fines < 0.500 mm (C and D), leading to a yield of 75%. However, this combination did not lead to protein enrichment (35.6%, -0.3%). Apparently, this type of milling is harsh and turns all fibrous materials into the fines fraction and does not increase the protein content. In other words, hammer milling also reduces the fiber fraction, which, together with protein, is included in the small fraction. Therefore, protein bodies cannot be isolated from the fiber structures by sieving. Apparently, this type of milling is harsh and turns all fibrous materials into a < 1 mm meal and does not change the protein content (34-35%) significantly.

**Table 5**

| | **Yield (%)** | **Crude Protein** | **Crude fiber** |
|---|---|---|---|
| sieving only | | | |
| Starting material | 100 | 35.9% | 11.8% |
| 0.250-0.500 mm (A) | 14 | 38.9% | 8.5% |
| < 0.250 mm (B) | 2 | 42.2% | 5.4% |

| hammer milling/sieving | | | |
|---|---|---|---|
| Starting material | 100 | 35.9% | 11.8% |
| Milled 0.250-0.500 mm (C) | 36 | 34.6% | 13.2% |
| Milled < 0.250 mm (D) | 39 | 36.5% | 10.8% |

### Example 4 Amino acid composition

The amino acid composition of the feedstock rapeseed meal and of the protein enriched fraction of trial 2 in Example 1 was determined by acid hydrolysis and HPLC and is presented in Table 6. This table also shows a comparison with the amino acid composition of regular soybean meal (CVB system 2023 / Dutch feed table).

The amino acid composition of the rapeseed meal fines was similar to that of the parent rapeseed meal. Both fractions contained high levels of lysine, methionine, cysteine and threonine.

There is a higher level of the essential sulphur-containing amino acids cysteine and methionine in both parent rapeseed meal and rapeseed meal fines. This makes the rapeseed meal fines with enriched protein compared to soybean meal an excellent replacer for monogastric feeds.

**Table 6**

| | Rapeseed meal | Protein enriched fraction | Soybean meal |
|---|---|---|---|
| **Amino Acids** | **/ 100 gram crude protein** | / **100 gram crude protein** | **/ 100 gram crude protein** |
| lysine | 6.2 | 5.7 | 6.2 |
| methionine | 2.1 | 2.2 | 1.4 |
| cysteine | 2.1 | 2.2 | 1.5 |
| threonine | 4.7 | 4.5 | 3.9 |
| isoleucine | 3.9 | 3.8 | 4.6 |
| arginine | 5.9 | 6.0 | 7.5 |
| phenylalanine | 3.9 | 4.1 | 5.2 |
| histidine | 2.7 | 2.9 | 2.7 |
| leucine | 6.8 | 7.2 | 7.7 |
| tyrosine | 3.0 | 2.9 | 3.7 |
| valine | 5.0 | 5.0 | 4.8 |
| alanine | 4.5 | 4.5 | 4.4 |
| aspartic acid and aspargine | 7.4 | 7.4 | 11.6 |
| glutamic acid and glutamine | 16.3 | 16.7 | 17.8 |
| glycine | 5.3 | 5.5 | 4.3 |
| proline | 6.2 | 5.7 | 5.1 |
| serine | 4.5 | 4.3 | 5.1 |

## Claims

1. Method for preparing a protein-enriched rapeseed meal fraction, the method comprising:
i) providing rapeseed meal;
ii) subjecting the rapeseed meal to a rolling-milling process comprising breaking using one or more pairs of fluted rollers and additional reducing using one or more pairs of smooth rollers;
iii) classifying the roller-milled rapeseed meal by sieving to obtain a protein-enriched fraction fraction in which at least 90% of the particles has a size smaller than 0.500 mm;
iv) collecting the protein-enriched fraction from the classified meal, wherein the yield of this protein-enriched fraction is at least 50%, based on the total weight of the rapeseed meal in step (i).

2. Method according to claim 1, wherein the protein-enriched fraction is at least +4 percentage points enriched, compared to the rapeseed meal in step (i).

3. Method according to any one of claim 1 or 2, wherein the fluted rollers in the roller milling process are in dull to dull disposition for all break passages.

4. Method according to any one of claims 1 to 3, wherein the roller milling process essentially consists of three break passages using fluted rollers and three reduction passages using smooth rollers.

5. Method according to any of claims 1 to 4, wherein a roller mill typically used for cereal or pulse milling is used to perform the roller milling process.

6. Method according to any of claims 1 to 5, wherein no other milling or classification methods are used in the process than said rolling-milling and said sieving.

7. Method according to any of the previous claims, wherein the sieving is performed using one or more sieves with an opening size in the range from 0.250 mm to 0.500 mm.

8. Method according to any of the previous claims, further comprising collecting a coarse fraction wherein at least 90% of the particles has a size of 0.500 mm or larger.

9. Method according to any of the previous claims, further comprising formulating the collected fraction into a paste, powder or liquid.

10. Method for formulating a food product or feed product comprising the method for preparing a protein-enriched rapeseed meal fraction according to any of the previous claims, and formulating the collected protein-enriched rapeseed meal fraction into a food product or feed product.

11. Method according to claim 10, wherein the feed product is feed for poultry, pigs or cattle.

## Patentansprüche

1. Verfahren zur Herstellung einer proteinangereicherten Rapssaatmehlfraktion, wobei das Verfahren umfasst:
i) Bereitstellen von Rapssaatmehl;
ii) Unterziehen des Rapssaatmehls einem Walzmahlprozess, umfassend Brechen unter Verwendung von einem oder mehreren Paaren von Riffelwalzen und zusätzliches Reduzieren unter Verwendung von einem oder mehreren Paaren von Glattwalzen;
iii) Klassifizieren des walzgemahlenen Rapssaatmehls durch Sieben, um eine proteinangereicherte Fraktion zu erhalten, in der mindestens 90 % der Partikel eine Größe kleiner als 0,500 mm aufweisen;
iv) Auffangen der proteinangereicherten Fraktion aus dem klassifizierten Mehl, wobei die Ausbeute dieser proteinangereicherten Fraktion mindestens 50 % beträgt, bezogen auf das Gesamtgewicht des Rapssaatmehls in Schritt (i).

2. Verfahren nach Anspruch 1, wobei die proteinangereicherte Fraktion mindestens +4 Prozentpunkte angereichert ist, verglichen mit dem Rapssaatmehl in Schritt (i).

3. Verfahren nach einem der Ansprüche 1 oder 2, wobei die Riffelwalzen in dem Walzmahlprozess für alle Brechdurchgänge in D-D-Anordnung (Dunst-Dunst-Anordnung) sind.

4. Verfahren nach einem der Ansprüche 1 bis 3, wobei der Walzmahlprozess im Wesentlichen aus drei Brechdurchgängen unter Verwendung von Riffelwalzen und drei Reduktionsdurchgängen unter Verwendung von Glattwalzen besteht.

5. Verfahren nach einem der Ansprüche 1 bis 4, wobei eine Walzmühle, die typischerweise zum Getreidemahlen oder Impulsmahlen verwendet wird, um Durchführen des Walzmahlprozesses verwendet wird.

6. Verfahren nach einem der Ansprüche 1 bis 5, wobei kein anderes Mahl- oder Klassifizierungsverfahren in dem Prozess als das Walzmahlen und das Sieben verwendet wird.

7. Verfahren nach einem der vorhergehenden Ansprüche, wobei das Sieben unter Verwendung von einem oder mehreren Sieben mit einer Öffnungsgröße im Bereich von 0,250 mm bis 0,500 mm durchgeführt wird.

8. Verfahren nach einem der vorhergehenden Ansprüche, des Weiteren umfassend Auffangen einer groben Fraktion, wobei mindestens 90 % der Partikel eine Größe von 0,500 mm oder größer aufweisen.

9. Verfahren nach einem der vorhergehenden Ansprüche, des Weiteren umfassend Formulieren der aufgefangenen Fraktion zu einer Paste, einem Pulver oder einer Flüssigkeit.

10. Verfahren zum Formulieren eines Lebensmittelprodukts oder Futtermittelprodukts, umfassend das Verfahren zum Herstellen einer proteinangereicherten Rapssaatmehlfraktion nach einem der vorhergehenden Ansprüche und Formulieren der aufgefangenen proteinangereicherten Rapssaatmehlfraktion zu einem Lebensmittelprodukt oder Futtermittelprodukt.

11. Verfahren nach Anspruch 10, wobei das Futtermittelprodukt an Geflügel, Schweine oder Rinder verfüttert wird.

## Revendications

1. - Procédé de préparation d'une fraction de farine de colza enrichie en protéines, le procédé comprenant :
i) fournir de la farine de colza ;
ii) soumettre la farine de colza à un processus de broyage par cylindres comprenant un concassage à l'aide d'une ou plusieurs paires de cylindres cannelés et une réduction supplémentaire à l'aide d'une ou plusieurs paires de cylindres lisses ;
iii) classifier par tamisage la farine de colza broyée par cylindres pour obtenir une fraction enrichie en protéines dans laquelle au moins 90 % des particules ont une taille inférieure à 0,500 mm ;
iv) collecter la fraction enrichie en protéines à partir de la farine classifiée, le rendement de cette fraction enrichie en protéines étant d'au moins 50 %, sur la base du poids total de la farine de colza à l'étape (i).

2. - Procédé selon la revendication 1, dans lequel la fraction enrichie en protéines présente un enrichissement d'au moins +4 points de pourcentage par rapport à la farine de colza à l'étape (i).

3. - Procédé selon l'une quelconque des revendications 1 et 2, dans lequel les cylindres cannelés dans le processus de broyage par cylindres sont disposés de manière émoussé-émoussé pour tous les passages de concassage.

4. - Procédé selon l'une quelconque des revendications 1 à 3, dans lequel le processus de broyage par cylindres consiste essentiellement en trois passages de concassage à l'aide de cylindres cannelés et en trois passages de réduction à l'aide de cylindres lisses.

5. - Procédé selon l'une quelconque des revendications 1 à 4, dans lequel un broyeur à cylindres généralement utilisé pour le broyage de céréales ou de légumineuses est utilisé pour effectuer le processus broyage par cylindres.

6. - Procédé selon l'une quelconque des revendications 1 à 5, dans lequel aucun autre procédé de broyage ou de classification n'est utilisé dans le processus que ledit broyage par cylindres et ledit tamisage.

7. - Procédé selon l'une quelconque des revendications précédentes, dans lequel le tamisage est effectué à l'aide d'un ou plusieurs tamis avec une taille d'ouverture dans la plage allant de 0,250 mm à 0,500 mm.

8. - Procédé selon l'une quelconque des revendications précédentes, comprenant en outre la collecte d'une fraction grossière dans laquelle au moins 90 % des particules ont une taille de 0,500 mm ou plus.

9. - Procédé selon l'une quelconque des revendications précédentes, comprenant en outre la formulation de la fraction collectée en une pâte, une poudre ou un liquide.

10. - Procédé de formulation d'un produit alimentaire ou d'un produit d'aliments pour animaux comprenant le procédé de préparation d'une fraction de farine de colza enrichie en protéines selon l'une quelconque des revendications précédentes, et la formulation de la fraction de farine de colza enrichie en protéines collectée en un produit alimentaire ou un produit d'aliments pour animaux.

11. - Procédé selon la revendication 10, dans lequel le produit d'aliments pour animaux est destiné à l'alimentation de volailles, de porcs ou de bovins.
